# EUROPÄISCHE PATENTANMELDUNG

(11) **EP 0 816 390 A2**
(43) Veröffentlichungstag der Anmeldung: **07.01.1998**
(21) Anmeldenummer: 97110350.2
(22) Anmeldetag: 25.06.1997
(51) Int. Cl.: C08F 8/00, C09D 11/10

(54) **Modifizierte Kohlenwasserstoffharze**

(30) Priorität: 03.07.1996 DE 19626725
(71) Anmelder: Vianova Resins GmbH, 55252 Mainz-Kastel (DE)
(72) Erfinder: Bender, Albert, Dr., 55130 Mainz (DE); Giencke, Astrid, Dr., 65719 Hofheim (DE)

(57) **Zusammenfassung**

Kohlenwasserstoffharze enthaltend wiederholende Einheiten abgeleitet von Verbindungen jeder der Gruppen der
A) zwei- oder mehrfach ungesättigten linearen, verzweigten oder cyclischen Kohlenwasserstoffe mit 4 bis 10 Kohlenstoffatomen sowie deren gegebenenfalls auch gemischte Oligomeren mit Polymerisationsgraden von 2 bis 10,
B) Naturharze und/oder Naturharzsäuren,
C) α,β-ungesättigten Carbonsäuren und/oder deren Anhydriden,
D) Verbindungen zweiwertiger Metalle, und
E) Fettsäuren;
erhältlich durch Umsetzung von Verbindungen der Gruppe A) mit Verbindungen der Gruppe B) und anschließende Umsetzung des Reaktionsprodukts mit Verbindungen aus jeder der Gruppen C), D) und E) bei einer Temperatur von 100 bis 300 °C unter Wasserabspaltung.

## Beschreibung

Die Erfindung betrifft modifizierte Kohlenwasserstoffharze aus Copolymerisaten von zwei- oder mehrfach ungesättigten linearen, verzweigten oder cyclischen Kohlenwasserstoffen mit 4 bis 10 Kohlenstoffatomen sowie deren gegebenenfalls auch gemischten Oligomeren mit Polymerisationsgraden von 2 bis 10 sowie Verfahren zu ihrer Herstellung und ihre Verwendung als Bindermittelharze in Druckfarben vorzugsweise für den Toluoltiefdruck.

Bindemittelharze für Tiefdruckfarben mit Toluol müssen den Drucken eine rasche Trocknung, einen guten Stand auf der Oberfläche des Bedruckstoffs, eine gute Scheuerfestigkeit sowie einen hohen Glanz verleihen. Dies gilt insbesondere für nicht oder nur schwach gestrichene und daher stark saugende Naturpapiere. Besonders schwierig ist es, solche Forderungen mit niedrigviskosen Harzen zu erfüllen, da diese im allgemeinen zu stark ins Papier penetrieren. Solche Harze sind aber gerade dann erwünscht, wenn Pigmente besonders gut dispergiert oder wenn festkörperreiche und damit lösungsmittelarme Farben hergestellt werden sollen.

Es sind auch bereits niederviskose Harze für Toluoltiefdruckfarben auf Basis polymerisierter Kohlenwasserstoffe bekanntgeworden.

Beispielsweise sind bereits Verfahren bekannt, Naturharze mit polymerisierten Kohlenwasserstoffen auf C₅-Basis, die auch als Mischpolymerisate mit Maleinsäureanhydrid oder Naturharzsäuren vorliegen können, α,β-ungesättigten Dicarbonsäureeinheiten und Calciumverbindungen in Gegenwart von Essigsäure zu niederviskosen Bindemittelharzen umzusetzen (US-A 4,528,036, US-A 4,552,592). Diese Verfahren haben jedoch den bekannten Nachteil, daß der größte Teil der Essigsäure bei den hohen Reaktionstemperaturen von ca. 250 °C wegen ihres niedrigen Siedepunkts von 116 °C verdampft, ohne sich umzusetzen, und sie dann in den üblicherweise verwendeten Stahlkesseln und Kesselleitungen schwere Korrosionsschäden verursacht. Außerdem entstehen bei diesem Verfahren hochviskose Schmelzen, die zu Verkrustungen und Ablagerungen an der Kesselwandung führen, und die mit den üblicherweise im technischen Maßstab verwendeten Rühraggregaten nur schwer zu bearbeiten sind.

Zwar besitzen diese Bindemittelharze bekanntermaßen eine ausgezeichnete Dispergierwirkung für Buntpigmente, doch ist ihre Leistung in Schwarzfarben mangelhaft, was sich im Glanzabfall der Farben äußert. Hier bilden sie nach dem Druck wenig elastische, dafür aber sehr spröde Farbfilme, die dann eine ungenügende Scheuerfestigkeit besitzen. Dies ist insbesondere bei den inzwischen sehr hoch gewordenen Druckgeschwindigkeiten von mehr als 20 m/s von großem Nachteil, da es wegen der erhöhten mechanischen Belastung zum Farbabrieb und zur Verschmutzung auf den Umlenkrollen der Papierbahn kommt.

Bekannt ist auch, Fettsäuren oder Naturharzsäuren mit Dicyclopentadien unter Druck und hohen Temperaturen umzusetzen (US-A 2,522,889, US-A 2,598,425). Diese Produkte sind zwar für Lackanstriche verwendbar, sind aber als Bindemittelharze in Druckfarben für den Toluoltiefdruck unbrauchbar.

Ähnliches gilt für Produkte, die beschrieben sind in DE-B 22 46 283, und die hergestellt werden durch Umsetzung von Tallölfettsäure mit einem durch Polymerisation hergestellten Kohlenwasserstoffharz aus Cyclopentadien in Gegenwart von Metallsalzen und gegebenenfalls Phenolen.

Es ist auch beschrieben, Tallölfettsäure, Kolophonium, Styrol, Dicyclopentadien, Maleinsäureanhydrid und Resole in Gegenwart von Magnesiumverbindungen gleichzeitig in einer einstufig verlaufenden Reaktion bei hohen Temperaturen und Drücken umzusetzen. Die Bindemittelharze sind für Tiefdruckfarben verwendbar (DE-A 35 31 242). Sie besitzen jedoch den Nachteil, daß damit formulierte Farben bei hohen Druckgeschwindigkeiten zu langsam trocknen.

Bekannt ist auch, Copolymerisate aus Dicyclopentadien und Kolophonium, die bei Drücken von bis zu 0,9 MPa (9 bar) hergestellt werden, mit Phenol-Aldehyd-Kondensationsprodukten, aber ohne Modifikation mit α,β-ungesättigten Carbonsäuren und deren Anhydriden, in Gegenwart einwertiger oder zweiwertiger Metallverbindungen zu Bindemittelharzen weiterzureagieren. Die Produkte sind aber nur für Farben für den Offsetdruck geeignet (EP-A 0 580 954, US-A 5,376,719).

Aus DE-B 25 27 719 ist auch bekannt, Cyclopentadien, α,β-äthylenisch ungesättigte Dicarbonsäuren bzw. deren Anhydride, Harzsäuren, Metallverbindungen und gegebenenfalls Alkohole miteinander zu Bindemittelharzen für Tiefdruckfarben umzusetzen.

Hierbei wird jedoch das Cyclopentadien entweder alleine zu einem Homopolymerisat oder zusammen mit wenigstens der α,β-äthylenisch ungesättigten Dicarbonsäure zu einem Copolymerisat umgesetzt. Es ist bekannt, daß diese Homopolymerisate und Copolymerisate eine starke Wärmereaktivität besitzen und sich deshalb die nachfolgenden, bei hoher Temperatur durchgeführten Folgereaktionen nur schwer beherrschen lassen. Im technischen Maßstab durchgeführte Reaktionen mit den üblichen Kesselentleerzeiten von ca. 4 bis 6 h führen deshalb zu Produkten, deren Ungleichmäßigkeit wegen der inzwischen geforderten engen Spezifikationen nicht mehr toleriert werden kann. Dies ist ein außerordentlicher Nachteil.

Es bestand daher die Aufgabe, die Unzulänglichkeiten der bekannten Produkte bzw. der bekannten Verfahren zu überwinden, und neue niederviskose Bindemittelharze für Toluoltiefdruckfarben zur Verfügung zu stellen, die im Vergleich zu den Harzen des Standes der Technik eine verbesserte Scheuerfestigkeit und bessere Benetzungseigenschaften besonders in Schwarzfarben aufweisen, die ohne Essigsäurezusätze herstellbar sind und die keine ungünstige Wärmereaktivität aufweisen.

Diese Aufgabe konnte dadurch gelöst werden, daß man zunächst Verbindungen ausgewählt aus zwei- oder mehrfach ungesättigten linearen, verzweigten oder cyclischen Kohlenwasserstoffen mit 4 bis 10 Kohlenstoffatomen sowie deren gegebenenfalls auch gemischten Oligomeren mit Polymerisationsgraden von 2 bis 10 mit Naturharzen und/oder Naturharzsäuren umsetzt, dann die erhaltenen Copolymerisate mit α,β-ungesättigten Carbonsäuren und/oder deren Anhydriden zur Reaktion bringt, durch Zusatz von zweiwertigen Metallverbindungen die Resinate bildet und durch Kondensation mit Fettsäuren die gewünschten Bindemittelharze erhält. Die Verbesserung von Verfahren und Produkteigenschaften gegenüber dem Stand der Technik durch die getroffenen Maßnahmen war nicht vorhersehbar und ist deshalb als überraschend zu bezeichnen.

Gegenstand der Erfindung sind daher modifizierte Kohlenwasserstoffharze enthaltend wiederholende Einheiten abgeleitet von Verbindungen jeder der Gruppen der
A) zwei- oder mehrfach ungesättigten linearen, verzweigten oder cyclischen Kohlenwasserstoffe mit 4 bis 10 Kohlenstoffatomen sowie deren gegebenenfalls auch gemischten Oligomeren mit Polymerisationsgraden von 2 bis 10 ,
B) Naturharze und/oder Naturharzsäuren,
C) α,β-ungesättigten Carbonsäuren und/oder deren Anhydriden,
D) Verbindungen zweiwertiger Metalle, und
E) Fettsäuren;
erhältlich durch Umsetzung von Verbindungen der Gruppe A) mit Verbindungen der Gruppe B) und anschließende Umsetzung des Reaktionsprodukts mit Verbindungen aus jeder der Gruppen C), D) und E) bei einer Temperatur von 100 bis 300 °C unter Wasserabspaltung.

Als Verbindungen der Gruppen A) bis E) finden vorzugsweise Verwendung:
A) Cyclopentadien, dessen Oligomere, wie Di-, und durch Diels-Alder-Addition erhältliche Tri- und Tetramere sowie die Alkylderivate oder Cooligomere dieser Verbindungen, z.B. Methylcyclopentadien, Cyclopentadien-Isopren-Dimere und Cyclopentadien-Piperylen-Dimere.
   Die betreffenden Ausgangssubstanzen brauchen keinen hohen Reinheitsgrad aufzuweisen. Es können beispielsweise Fraktionen, insbesondere konzentrierte Fraktionen, verwendet werden, die beim thermischen Dimerisieren einer C₅-Fraktion entstehen, wobei diese C₅-Fraktion als Nebenprodukt bei der thermischen Zersetzung von Naphtha und entsprechenden Erdölfraktionen anfällt. Eei einer solchen Dimerisierung wird das in einer solchen Fraktion enthaltene Cyclopentadien bzw. Methylcyclopentadien in Dicyclopentadien, Dimethyldicyclopentadien, ein Dimeres aus Cyclopentadien und Methylcyclopentadien, ein Dimeres aus Cyclopentadien und Isopren, ein Dimeres aus Cyclopentadien und Piperylen und andere entsprechende dimere Substanzen umgewandelt.
   In diesen Fraktionen können noch weitere ungesättigte Monomere, wie z.B. Propylen, Buten, Butadien, Penten, Cyclopenten oder Cyclohexen enthalten sein. Auch können sogenannte C₉-Fraktionen, die als Nebenprodukt bei der Crackung von Naphtha und ähnlichen Fraktionen entstehen, enthalten sein. Diese bestehen dann beispielsweise aus Styrol, α-Methylstyrol, Vinyltoluol, Inden, Methylinden oder Mischungen davon.
   Demzufolge ist eine höhere Reinheit der Komponente A) nicht immer erforderlich, es ist jedoch bevorzugt, daß der Massenanteil an Cyclopentadieneinheiten 70 % oder mehr beträgt.
B) Kolophonium, Wurzelharz, Tallharz sowie disproportioniertes oder partiell hydriertes oder dimerisiertes Naturharz beliebiger Provenienz, wobei die Naturharze oder Naturharzsäuren auch in untergeordneten Mengen weitere Terpene enthalten oder mit Verbindungen der Substanzgruppe C) modifiziert sein können, sowie Harzsäuren wie z.B. Abietinsäure, Lävopimarsäure, Dextropimarsäure,
C) α,β-äthylenisch ungesättigte Carbonsäuren und/oder deren Anhydride, insbesondere Fumarsäure, Maleinsäure, Maleinsäureanhydrid, Itaconsäure, Itaconsäureanhydrid, Zimtsäure, Acrylsäure, Methacrylsäure, Croton- und Isocrotonsäure sowie Vinylessigsäure,
D) Verbindungen zweiwertiger Metalle, vorzugsweise in Form ihrer Oxide, Hydroxide, Carbonate, Hydrogencarbonate, Acetate, Stearate, Oleate, insbesondere des Magnesiums, Calciums und Zinks, jeweils einzeln oder in Mischung,
E) Fettsäuren mit 10 bis 26 C-Atomen oder Dimere und Trimere von ungesättigten Fettsäuren, beispielsweise gesättigte Fettsäuren, wie Palmitin- oder Stearinsäure, insbesondere jedoch ungesättigte Fettsäuren, z. B. Soja-, Leinöl-, Tallöl-Fettsäure, sowie deren Di- und Trimere und Fettsäuregemische wie Tallöl. Die Fettsäuren und deren Oligomere lassen sich einzeln oder im Gemisch einsetzen.

Der Massenanteil der einzelnen Verbindungen, bezogen auf die Gesamtmasse der eingesetzten Verbindungen (= 100 %), bei der Herstellung der erfindungsgemäßen modifizierten Cyclopentadienharze beträgt vorzugsweise
10 bis 90, vorzugsweise 20 bis 70, insbesondere 30 bis 60 % der zwei- oder mehrfach ungesättigten linearen, verzweigten oder cyclischen Kohlenwasserstoffen mit 4 bis 10 Kohlenstoffatomen sowie deren gegebenenfalls auch gemischten Oligomeren mit Polymerisationsgraden von 2 bis 10 aus der Substanzgruppe A),
10 bis 90, vorzugsweise 20 bis 70, insbesondere 30 bis 50 %, Naturharze und Naturharzsäuren aus der Substanzgruppe B),
0,1 bis 20, vorzugsweise 1 bis 10, insbesondere 3 bis 8 %, α,β-ungesättigte Carbonsäuren und/oder deren Anhydride aus der Substanzgruppe C),
0,1 bis 20, vorzugsweise 1 bis 10, insbesondere 2 bis 8 %, Metallverbindungen aus der Substanzgruppe D),
0,1 bis 20, vorzugsweise 1 bis 10, insbesondere 2 bis 8 %, Fettsäuren aus der Substanzgruppe E).

Die Erfindung betrifft auch ein Verfahren zur Herstellung eines modifizierten Cyclopentadienharzes in mindestens zwei Stufen, bei dem die Komponenten A) und B) zunächst in der ersten Stufe bei einer Temperatur von 200 bis 300 °C, vorzugsweise 220 bis 270 °C, und unter einem Druck von 0,1 bis 1,5, vorzugsweise 0,6 bis 1 MPa (1 bis 15, vorzugsweise 6 bis 10 bar), miteinander zur Reaktion gebracht werden, und dann das erhaltene Polymerisat bei Drücken bis zu 0,2 MPa (2 bar), vorzugsweise drucklos, mit den Verbindungen C), D) und E) im Temperaturbereich von 200 bis 280 °C, vorzugsweise 220 bis 270 °C, unter Wasserabspaltung in den nachfolgenden Stufen umgesetzt wird, wobei in der zweiten und den weiteren Stufen jeweils das Reaktionsprodukt der vorigen Stufe mit mindestens einer Verbindung aus mindestens einer der Gruppen C), D) und E) reagiert wird. Bevorzugt wird das Verfahren in zwei Stufen durchgeführt, wobei in der zweiten Stufe das Reaktionsprodukt der ersten Stufe mit jeweils mindestens einer der Verbindungen der Gruppen C), D) und E) umgesetzt wird.

Zur Herstellung werden die in der Naturharzchemie üblichen Apparaturen verwendet. Sie besteht üblicherweise aus einem Stahlkessel, der mit Wärmeträgeröl beheizt werden kann, der für Druckreaktionen ausgelegt und mit einer Dosier- und Destillationsvorrichtung sowie einem Rührwerk ausgerüstet ist.

Zunächst wird diese Apparatur mit dem Naturharz und der Naturharzsäure B) beschickt, wobei auch gegebenenfalls inerte Lösungsmittel, wie z. B. Xylol mitverwendet werden können, und anschließend auf eine Temperatur von vorzugsweise 220 bis 270 °C erhitzt. Dann wird die Apparatur verschlossen und gegen den sich aufbauenden Druck flüssiges Cyclopentadien und/oder flüssige Cyclopentadienverbindungen A) zudosiert. Dabei steigt der Druck auf 0,6 bis 1 MPa (6 bis 10 bar) an. Nach beendeter Reaktion, die am Druckabfall erkennbar ist, wird die Apparatur entspannt und die α,β-ungesättigte Carbonsäure und/oder deren Anhydrid C) hinzugefügt.

In einer anderen Ausführungsformen des Verfahrens ist es aber auch möglich, die Komponente C) erst nach erfolgter Umsetzung mit den Metallverbindungen zuzugeben. Man kann aber auch ein Naturharz und eine Naturharzsäure einsetzen, die bereits mit der α,β-ungesättigten Carbonsäure und/oder deren Anhydrid modifiziert sind. Diese Ausführungsformen sind jedoch weniger bevorzugt.

Bei der bevorzugten Ausführung wird nach erfolgter Umsetzung der-Komponenten A) bis C) die Metallverbindung D) dem Ansatz hinzugefügt, was vorzugsweise bei einer Temperatur von 240 bis 260 °C erfolgt. Bevorzugt wird die Metallverbindung nicht als Feststoff, sondern in Form einer Suspension, beispielsweise in Xylol, zugetropft. Das Reaktionswasser und weitere flüchtige Anteile werden dabei abdestilliert. Dann wird die Fettsäurekomponente E) zugetropft, wobei weiteres Wasser entsteht, das abdestilliert wird. Es ist bevorzugt, daß die Fettsäurekomponente E) erst nach der Zugabe der Metallverbindung D) dem Ansatz beigefügt wird, da bei umgekehrter Verfahrensweise stark schäumende Harzschmelzen entstehen können, die das Verfahren für den technischen Maßstab undurchführbar machen können.

Die verwendeten Fettsäuren wirken nicht korrosiv und werden vollständig in das Harz eingebaut, wobei sich durch Art und verwendete Menge bequem die Schmelzeviskosität der Ansätze steuern läßt; sie liegt bei 250 °C und einem Schergefälle von 100 s⁻¹ im allgemeinen zwischen 1 000 und 5 000 mPa·s verglichen mit bis zu ca. 15 000 mPa·s bei den Produkten des Standes der Technik. Dies ist ein außerordentlicher Vorteil.

Der Fortgang der Reaktion kann zweckmäßigerweise durch die Bestimmung der Viskositätswerte in einem Lösungsmittel, wie beispielsweise Toluol, ermittelt werden. Beim gewünschten Stadium kann die Reaktion dann abgebrochen werden, wobei gegebenenfalls flüchtige Anteile durch anschließendes kurzzeitiges Evakuieren der Apparatur entfernt werden.

Die erfindungsgemäßen Bindemittelharze fallen nach Abkühlen der Schmelze im Allgemeinen als Feststoff an. Die Schmelze kann jedoch auch vor dem Abkühlen durch Zugabe von Lösungsmitteln wie Toluol oder auch Benzinfraktionen in einen Firnis überführt werden, wobei alle Übergänge von einer festen bis einer flüssigen Form des Reaktionsprodukts möglich sind.

Zur Bestimmung der Viskositäten werden beispielsweise toluolische Lösungen mit einem Massenanteil an gelöstem Stoff von 50 % in einem üblichen Rotationsviskosimeter bei 23 °C vermessen. Die Viskositäten liegen vorzugsweise in einem Bereich von 10 bis 300 mPa·s, insbesondere 30 bis 80 mPa·s. Diese Bereiche können jedoch auch über- oder unterschritten werden.

Die molare Masse der erfindungsgemäßen Harze kann durch Gelpermeationschromatographie der Harzlösungen in Tetrahydrofuran (THF) an Polystyrolgel in einem Permeationsmeßgerät nach bekannten Methoden ermittelt werden. Das Gewichtsmittel der molaren Masse M_{w} der erfindungsgemäßen Harze liegt gemäß den erhaltenen Meßergebnissen vorzugsweise bei Werten von M_{w} > 500 g/mol und ist nach oben nicht kritisch begrenzt. Besonders bevorzugt liegt M_{w} jedoch in einem Bereich von 500 bis 3000 g/mol.

Die erfindungsgemäße Arbeitsweise, das Naturharz und die Naturharzsäure B) vor der Reaktion mit C), D) und E) mit Cyclopentadien und Cyclopentadienverbindungen A) zu polymerisieren, hat gegenüber dem beim Stand der Technik (US-A 4,528,036, US-A 4,552,592) beschriebenen Verfahren, ein Naturharz und ein Kohlenwasserstoffharzpolymerisat in die Reaktion einzusetzen, den verfahrenstechnischen Vorteil einer höheren Reaktivität und eines damit verbundenen höheren Umsetzungsgrades. Damit ist gewährleistet, daß die Bildung wenig reaktiver oligomerer Kohlenwasserstoffharzanteile unterdrückt wird. Hingegen können diese in reinen Kohlenwasserstoffpolymerisaten enthalten sein und aufgrund ihrer schlechten drucktechnischen Eigenschaften die Leistungsfähigkeit der mit diesem Bindemittelharz formulierten Farbe negativ beeinflussen.

Andererseits ist es jedoch auch möglich, die erfindungsgemäßen Harze während oder nach der eigentlichen Umsetzung durch Zugabe weiterer Substanzen zu modifizieren, wie es bei der Herstellung von Druckfarbenharzen üblich ist, sofern damit nicht die drucktechnischen Eigenschaften negativ beeinflußt werden.

Beispielsweise ist es möglich, niedermolekulare Verbindungen wie Kolophonium, Kolophoniumester, Mineralöle, oder Polymere wie Phenolharze, Polyester, Alkydharze, modifizierte Kohlenwasserstoffharze, Phenolharz-modifizierte Naturharzsäureester zuzugeben, um die Lösungsviskosität zu optimieren, wie es z. B. in der deutschen Patentanmeldung DE-P 195 38 954.9 beschrieben ist.

Es ist aber auch möglich, den Ansätzen saure Katalysatoren hinzuzufügen. Dies ist insbesondere dann interessant, wenn eine Modifizierung mit Phenolharz, Phenol oder Aldehyden beabsichtigt ist. Als Katalysatoren seien z. B. genannt Sulfonsäuren wie Benzolmono- und -disulfonsäure, Phenolsulfonsäure, p-Toluolsulfonsäure; Beispiele für solche Verfahren sind aufgeführt in US-A 4,528,036.

Die beim Stand der Technik beschriebenen Verfahren (US-A 4,528,036, US-A 4,552,592) benötigen zwingend die Mitverwendung von Calciumverbindungen. Die ausschließliche Verwendung von Magnesium- oder Zinkverbindungen, wie sie bei Druckfarbenharzen erwünscht sein kann, ist aber in diesen Fällen nicht möglich, da trübe Harze und Harzlösungen oder Harze mit zu hoher Viskosität und in Toluol unlöslichen Anteilen resultieren, die die Eigenschaften der damit formulierten Bindemittel stark beeinträchtigen und die Bindemittelharze sogar unbrauchbar machen können. Mit Magnesium- und Zinkverbindungen aufgebaute Harze zeigen aber häufig eine herausragende Pigmentbenetzung. Es ist ein ganz besonders großer Vorteil der Erfindung, daß sich damit erfindungsgemäße Produkte herstellen lassen, die sowohl im Festzustand wie auch in toluolischer Lösung völlig blank (d.i. frei von ungelösten oder kristallinen Anteilen) sind.

Sie besitzen deshalb ein ausgezeichnetes Benetzungsverhalten für die im Illustrationstiefdruck verwendeten Pigmente. Sie vermögen insbesondere den in Schwarzfarben verwendeten Ruß, der bekanntermaßen wegen seiner unpolaren Oberfläche schlecht dispergierbar ist, ausgezeichnet zu benetzen.

Im Vergleich zu den Harzen, die nach dem in DE-B 25 27 719 angegebenen Verfahren hergestellt werden, wobei zunächst Cyclopentadien bzw. Dicyclopentadien homopolymerisiert oder mit Maleinsäureanhydrid copolymerisiert werden, weisen die neuen erfindungsgemäßen Produkte nach dem neuen Verfahren, zunächst Cyclopentadien bzw. Dicyclopentadien mit dem Naturharz umzusetzen, den großen Vorteil auf, daß nach den Folgereaktionen Produkte mit ausgezeichneter Wärmestabilität entstehen.

Der andersartige Aufbau der neuen erfindungsgemäßen Harze wird auch dadurch bestätigt, daß sich vorteilhaft auch statt Maleinsäureanhydrid Acryl- und Methacrylsäure verwenden lassen, die hingegen beim Stand der Technik beschriebenen Verfahren keine guten Ergebnisse liefern.

Weiterer Gegenstand der Erfindung ist daher die Verwendung der erfindungsgemäßen Harze als Bindemittelharze in Pigmentanreibungen und -konzentraten sowie in Druckfarben vorzugsweise für den Illustrationstiefdruck mit Toluol.

Die erfindungsgemäßen Harze weisen darüber hinaus eine ausgezeichnete Verträglichkeit mit anderen Bindemitteln, beispielsweise mit modifizierten Naturharzsäureestern, Resinaten, Kohlenwasserstoffharzen und Chlorkautschuk auf, wodurch sie breit einsetzbar sind.

Außerdem zeichnen sie sich vorteilhaft durch einen vergleichsweise flachen Viskositätsverlauf beim Verdünnen mit Toluol aus, ihre Viskosität nimmt also auch bei steigendem Harzgehalt nur wenig zu. Diese Eigenschaft ist beim Dispergiervorgang besonders wichtig, da die Pigmente möglichst viel Harz für eine optimale Benetzung benötigen, die entstehenden Konzentrate und Anreibungen aber immer noch gut fließfähig, d. h. niedrigviskos sein sollen. Dies macht sie insbesondere auch überlegen gegenüber Bindemittelharzen des Standes der Technik, da diese ein wesentlich ungünstigeres Verdünnungsverhalten zeigen. Dieses unterschiedliche Verhalten der Bindemittelharze ist als außerordentlich überraschend zu bezeichnen.

Die Toluol enthaltenden Tiefdruckfarben werden nach den üblichen Methoden formuliert. Dazu wird das geeignete Bindemittelharz in Toluol gelöst und dieser Firnis mit Hilfe eines Dispergieraggregats pigmentiert oder eine vorab hergestellte Pigmentanreibung mit Toluol verdünnt. Als Zuschlagstoffe können beispielsweise Füllstoffe wie Calciumcarbonat oder grenzflächenaktive Mittel zur Verbesserung der Pigmentdispersion wie Lecithin oder Wachse zur Verbesserung der Scheuerfestigkeit, mitverwendet werden.

Weiterer Gegenstand der Erfindung ist die Verwendung der erfindungsgemäßen Harze als Bindemittelharze in Druckfarben für den Offsetdruck und den Buchdruck, wo sie überraschenderweise gleichfalls einsetzbar sind, und wo sie insbesondere in Gelform als Gelfirnisse sehr vorteilhaft verwendbar sind. Die Herstellung der Gelfirnisse erfolgt vorzugsweise durch Reaktion der Bindemittelharze mit Aluminiumverbindungen, wie z.B. Aluminiumalkoholat oder mit Acetessigester stabilisiertem Aluminiumalkoholat nach bekannten Verfahrensweisen in hochsiedendem Mineralöl. Die Gelfirnisse werden gegebenenfalls mit weiteren Bindemittelharzen, wie z.B. Phenolharz-modifizierten Kolophoniumharzen, vegetabilischen Ölen, Wachsen, Füllstoffen, Sikkativen und weiteren Zusatzstoffen vermischt und durch Pigmentierung die für den Offsetdruck und Buchdruck verwendbaren Druckfarben erhalten, die sich u.a. bei den in Druckmaschinen auftretenden Arbeitstemperaturschwankungen in einem sehr breiten Bereich weitgehend unempfindlich in ihrem Viskositätsverhalten zeigen und auch nicht unlöslich werden, was außerordentlich vorteilhaft ist.

Zur Ermittlung der Mineralölverträglichkeit bzw. der Klarlöslichkeit in Mineralöl der erfindungsgemäßen Harze werden diese jeweils bei 180 °C in standardisiertem Mineralöl (Siedebereich 240 bis 270 °C, Anilinpunkt 72 °C) zu klaren Harzlösungen mit einem Massenanteil an Harz in der Lösung von 35 % gelöst, die Lösungen auf 23 °C abgekühlt und sogleich unter Rühren bis zum Auftreten einer Trübung (Trübungspunkt) mit dem gleichen Mineralöl titriert. Das am Trübungspunkt in der Lösung vorliegende Verhältnis der Masse an Harz zur Masse an Mineralöl wird als Verträglichkeit bzw. Klarlöslichkeitsendpunkt bezeichnet. Analog dazu wird die Verträglichkeit in Leinöl bestimmt.

Wegen ihrer guten Verträglichkeit mit Aliphaten sind die erfindungsgemäßen neuen modifizierten Kolophoniumharze auch in Kombination mit niedrig-siedenden Benzinfraktionen einsetzbar, wie sie z.B. im Illustrationstiefdruck mit Benzin verwendet werden. Weiterer Gegenstand der Erfindung ist daher die Verwendung der erfindungsgemäßen Harze als Bindemittelharze in Druckfarben für den Illustrationstiefdruck mit Benzin.

Diese breite Einsetzbarkeit der neuen Verbindungen für derart unterschiedliche Druckverfahren wie Offset-, Buch- und Tiefdruck, ist ein ganz besonders wichtiger Vorteil und eine außerordentliche Verbesserung gegenüber den Harzen des Standes der Technik.

Die Erfindung wird durch die nachfolgenden Beispiele näher erläutert, ohne sie jedoch einzuschränken. Mengenangaben in den Beispielen in Teilen und Prozent bedeuten Massenanteile, soweit nicht anders vermerkt.

Die Lösungsviskositäten in den nachfolgenden Beispielen werden an toluolischen Lösungen mit einem Massenanteil an Harz in der Lösung von 50 % bei einer Temperatur von 23 °C bestimmt.

Die angegebenen Säurezahlen (in mg/g) werden nach DIN 53402 bestimmt und geben das Verhältnis der zur Neutralisation benötigten Masse an Kaliumhydroxid zur Masse des (Fest)-Harzes an.

### Beispiel 1

### Herstellung eines Bindemittelharzes unter Verwendung von Calciumhydroxid

In einer 3 l-Druckapparatur werden 300 g Kolophonium auf 260 °C erhitzt. Dazu werden innerhalb von 2 h 400 g technisches Dicyclopentadien mit einem Gehalt von 75 % Cyclopentadien-Einheiten zudosiert und weitere 5 h unter Rühren bei dieser Temperatur gehalten; dabei bildet sich der zunächst auf 0,9 MPa (9 bar) gestiegene Druck auf 0,5 MPa (5 bar) zurück. Dann wird auf Atmosphärendruck entspannt, 45 g Maleinsäureanhydrid zugegeben und ein halbe Stunde nachgerührt. Dann werden 40 g Calciumhydroxid, suspendiert in 50 g Xylol, während einer Stunde zudosiert. Man rührt noch eine halbe Stunde nach und dosiert anschließend während 20 min 50 g Tallölfettsäure zu, wobei das entstehende Wasser abdestilliert wird. Man rührt noch eine weitere Stunde, evakuiert dann 5 min bei 10 kPa (100 mbar), stellt wieder auf Atmosphärendruck und entleert den Ansatz. Es werden 776 g Harz mit dem Erweichungspunkt 145 °C und einer Lösungsviskosität von 63 mPa·s erhalten.

In Mineralöl vom Siedebereich 240 bis 270 °C (Anilinpunkt 72 °C) besitzt das Harz eine Verträglichkeit von besser als 1 : 5 und in Leinöl von besser als 1 : 2,5.

### Beispiel 2

### Herstellung eines Bindemittelharzes unter Verwendung von Magnesiumhydroxid

In einer 3 l-Druckapparatur werden 805 g Kolophonium auf 260 °C erhitzt. Dazu werden innerhalb 2 h 910 g technisches Dicyclopentadien mit einem Gehalt von 75 % Cyclopentadien-Einheiten zudosiert und weitere 5 h unter Rühren bei dieser Temperatur gehalten; dabei bildet sich der zunächst auf 0,9 MPa (9 bar) gestiegene Druck auf 0,5 MPa (5 bar) zurück. Dann wird auf Atmosphärendruck entspannt, 91 g Maleinsäureanhydrid zugegeben und ein halbe Stunde nachgerührt. Dann werden 40 g Magnesiumoxid, suspendiert in 100 g Xylol, während einer Stunde zudosiert. Man rührt noch eine halbe Stunde nach und dosiert anschließend während 20 min 60 g Tallölfettsäure zu, wobei das entstehende Wasser abdestilliert wird. Man rührt noch eine weitere Stunde, evakuiert dann 5 min bei 10 kPa (100 mbar), stellt wieder auf Atmosphärendruck und entleert die Apparatur. Es werden 1776 g blankes Harz mit dem Erweichungspunkt 146 °C und einer Lösungsviskosität von 45 mPa·s (blanke Lösung) mit einer gewichtsmittleren molaren Masse M_{w} = 1221 g/mol erhalten. Das Harz besitzt bei 250 °C und einem Schergefälle von 100 s⁻¹ eine Schmelzeviskosität von 3 900 mPa·s.

### Beispiel 3

### Herstellung eines Bindemittelharzes unter Verwendung von Zinkoxid

Man verfährt wie in Beispiel 1 angegeben mit der Abänderung, daß 39 g Zinkoxid und 30 g Tallölfettsäure verwendet werden.
Es werden 756 g blankes Harz mit dem Erweichungspunkt 146 °C und einer Lösungsviskosität von 45 mPa·s (blanke Lösung) mit einer gewichtsmittleren molaren Masse M_{w} = 1063 g/mol erhalten.

### Beispiel 4

### Herstellung eines Bindemittelharzes unter Verwendung von Magnesiumoxid und eines Phenol-Formaldehyd-Kondensationsprodukts

Man verfährt wie in Beispiel 2 angegeben mit der Abänderung, daß der Ansatz nach der Magnesiumoxid-Zugabe mit 20 g eines wäßrigen Phenol-Formaldehyd-Kondensationsprodukts versetzt wird, das nach den aus der Phenolharzchemie bekannten Methoden hergestellt wird (70 % in Wasser, Viskosität 250 mPa·s).
Es werden 768 g Harz mit dem Erweichungspunkt 157 °C und einer Lösungsviskosität von 325 mPa·s und einer gewichtsmittleren molaren Masse M _{w} = 2750 g/mol erhalten.

### Beispiel 5

### Herstellung eines Bindemittelharzes unter Verwendung von Calciumhydroxid und zusätzlicher Kolophoniumzugabe

In einer 3 l-Druckapparatur werden 195 g Kolophonium auf 260 °C erhitzt. Dazu werden innerhalb 2 h 455 g technisches Dicyclopentadien mit einem Gehalt von 75 % Cyclopentadien-Einheiten zudosiert ; es wird weitere 5 h unter Rühren bei dieser Temperatur gehalten, dabei bildet sich der zunächst auf 0,9 MPa (9 bar) gestiegene Druck auf 0,5 MPa (5 bar) zurück. Dann wird auf Atmosphärendruck entspannt, 210 g Kolophonium und 45 g Maleinsäureanhydrid zugegeben und ein halbe Stunde nachgerührt. Dann werden 40 g Calciumhydroxid, suspendiert in 50 g Xylol, während einer Stunde zudosiert. Man rührt noch eine halbe Stunde nach und dosiert anschließend während 20 min 50 g Tallölfettsäure zu, wobei das entstehende Wasser abdestilliert wird. Man rührt noch eine weitere Stunde, evakuiert dann 5 min bei 10 kPa (100 mbar), stellt auf Atmosphärendruck und entleert die Apparatur. Es werden 772 g Harz mit dem Erweichungspunkt 147 °C und einer Lösungsviskosität von 58 mPa·s erhalten.

### Beispiel 6

### Herstellung eines Bindermittelharzes unter Verwendung gemischter Metallverbindungen

300 g Kolophonium und 400 g techn. Dicylopentadien (mit einem Gehalt von 70 % an Cyclopentadieneinheiten) werden wie in Beispiel 1 angegeben polymerisiert.
Nach Entspannen auf Atmosphärendruck setzt man analog zu Beispiel 5 mit 210 g Kolophonium, 45 g Maleinsäureanhydrid, 15 g Zinkoxid, 15 g Calciumhydroxid, 7 g Magnesiumoxid und 40 g Tallölfettsäure um. Es werden 960 g Festharz mit dem Erweichungspunkt 146 °C und einer Lösungsviskosität von 44 mPa·s erhalten.

Eine für eine Dauer von 5 h bei 250 °C gehaltene Probe besaß eine Lösungsviskosität von 46 mPa·S, d.h. das Harz besaß keine nennenswerte Wärmereaktivität.

### Beispiel 7

### Herstellung eines Bindermittelharzes unter Verwendung gemischter Metallverbindungen

Man verfährt wie im Beispiel 6 angegeben, wobei 300 g Kolophonium mit 400 g techn. Dicylopentadien (mit einem Gehalt von 70 % an Cyclopentadieneinheiten) polymerisiert werden, und dieses Copolymerisat mit 210 g Kolophonium, 60 g Maleinsäureanhydrid, 22,5 g Calciumhydroxid, 22,5 g Zinkoxid und 40 g Tallölfettsäure umgesetzt wird. Es werden 985 g Festharz mit dem Erweichungspunkt 142 °C und der Lösungsviskosität 40 mPa·s erhalten.

### Beispiel 8

### Herstellung eines Bindemittelharzes unter Verwendung eines Gemisches von Dicyclopentadien und Styrol

In einer 3 l-Druckapparatur werden 300 g Kolophonium auf 260 °C erhitzt. Dazu wird innerhalb von 4 h ein Gemisch aus 700 g techn. Dicyclopentadien (mit einem Gehalt von 80 % an Cyclopentadieneinheiten) und 100 g Styrol zudosiert und weitere 5 h unter Rühren bei dieser Temperatur gehalten. Dann wird auf Atmosphärendruck entspannt, 315 g Kolophonium und 70 g Maleinsäureanhydrid zugegeben und ein halbe Stunde nachgerührt. Dann werden 30 g Calciumhydroxid, suspendiert in 40 g Xylol, während 45 min zugetropft. Man rührt noch eine halbe Stunde nach und dosiert anschließend während 20 min 60 g Tallölfettsäure zu, wobei das entstehende Wasser abdestilliert wird. Man rührt noch eine weitere Stunde, hält dann 5 min bei 10 kPa (100 mbar), stellt wieder auf Atmosphärendruck und entleert den Ansatz. Es werden 1465 g Festharz mit dem Erweichungspunkt 120 °C und einer Lösungsviskosität 115 mPa·s erhalten.

### Beispiel 9

### Herstellung eines Bindemittelharzes unter Verwendung eines Gemisches aus Dicyclopentadien und Inden

Man verfährt wie im Beispiel 8 angegeben mit der Abänderung, daß in der Polymerisationsstufe ein Gemisch aus 600 g techn. Dicyclopentadien (mit einem Gehalt von 80 % an Cyclopentadieneinheiten) und 300 g einer Erdölfraktion mit einem Gehalt von 27 % Inden eingesetzt wird. Es werden nach der Folgeumsetzung 1354 g Festharz mit dem Erweichungspunkt 105 °C und der Lösungsviskosität 35 mPa·s erhalten.

### Beispiel 10

### Herstellung eines Bindemittelharzes, das mit Methacrylsäure modifiziert ist

300 g Kolophonium und 400 g techn. Dicyclopentadien (mit einem Gehalt von 70 % an Cyclopentadieneinheiten) werden wie in Beispiel 1 angegeben polymerisiert.

Nach Entspannen auf Atmosphärendruck versetzt man mit 210 g Kolophonium und kühlt auf 160 °C ab. Dann werden innerhalb von 30 min 45 g Methacrylsäure zugetropft. Dann gibt man 5 g Calciumhydroxid zu, erhöht die Temperatur auf 250 °C und versetzt den Ansatz mit 10 g Tallölfettsäure. Man rührt noch 2 h nach und entfernt flüchtige Anteile durch kurzes Evakuieren. Es werden 902 g eines hell gefärbten Harzes mit dem Erweichungspunkt 123 °C, der Säurezahl 37 mg/g und der Lösungsviskosität 21 mPa·s erhalten.

### Beispiel 11

### Herstellung eines Bindemittelharzes, das mit Acrylsäure modifiziert ist

300 g Kolophonium und 400 g techn. Dicyclopentadien (mit einem Gehalt von 70 % an Cyclopentadieneinheiten) werden wie in Beispiel 1 angegeben polymerisiert.

Nach Entspannen auf Atmosphärendruck setzt man analog zu Beispiel 10 mit 210 g Kolophonium, 45 g Acrylsäure, 40 g Calciumhydroxid und 50 g Tallölfettsäure um. Es werden 971 g eines hell gefärbten Harzes mit dem Erweichungspunkt 154 °C, der Säurezahl 15 mg/g und der Lösungsviskosität 598 mPa·s erhalten.

### Beispiel 12

### Herstellung eines Bindemittelharzes, bei dem in der Polymerisationsstufe ein mit Maleinsäureanhydrid modifiziertes Naturharz verwendet wird

500 g Kolophonium und 60 g Maleinsäureanhydrid werden 30 min auf 160 °C erhitzt, wobei sich das Anhydrid an das Naturharz anlagert.
Dann wird auf 250 °C erhitzt, die Apparatur druckdicht verschlossen und 450 g techn. Dicyclopentadien (mit einem Gehalt von 80 % an Cyclopentadieneinheiten) zudosiert. Nach einer Nachreaktionszeit von 5 h wird auf Atmosphärendruck entspannt, 10 g Maleinsäureanhydrid zugegeben und danach 20 g Magnesiumoxid suspendiert in 50 g Xylol während 30 min zudosiert. Man rührt noch 30 min nach und dosiert anschließend während 20 min 40 g Tallölfettsäure zu, wobei das entstehende Wasser abdestilliert wird. Man rührt noch eine weitere Stunde, hält dann 5 min bei 10 kPa (100 mbar), stellt wieder auf Atmosphärendruck und entleert den Ansatz. Es werden 995 g Harz mit dem Erweichungspunkt 129 °C und der Lösungsviskosität 214 mPa·s erhalten.

### Vergleichsbeispiel 1

Nach US-A 4,552,592 wird analog Beispiel 3 ein Bindemittelharz mit der Lösungsviskosität 115 mPa·s hergestellt. Das Harz besitzt bei 250 °C und einem Schergefälle von 100 s⁻¹ eine Schmelzeviskosität von 12 400 mPa·s.

### Vergleichsbeispiel 2

Nach US-A 4,552,592 wird analog Beispiel 3 ein Bindemittelharz hergestellt, bei dem der Calciumhydroxid-Einstand durch die äquivalente Menge Magnesiumhydroxid ersetzt wird. Es wird ein trübes Harz erhalten, das sich nicht vollständig in Toluol lösen läßt.

### Vergleichsbeispiel 3

Nach DE-B 25 27 719 wird analog Beispiel 2 ein Bindemittelharz hergestellt, das eine Lösungsviskosität (gelöst in Toluol; Massenanteil des Harzes in der Lösung 50 %) von 32 mPa·s aufweist.
Eine für eine Dauer von 5 h bei 250 °C gehaltene Probe des Harzes besaß danach eine Lösungsviskosität von 168 mPa·s, d.h. das Harz zeigte eine hohe, nachteilige Wärmereaktivität.

### Anwendungstechnisches Beispiel

Nach üblichen Verfahren werden jeweils aus den Bindemittelharzen der Beispiele 1 (Farbe A), 2 (Farbe B) sowie 3 (Farbe C) und des Vergleichsbeispiels 1 (Farbe D) nach den üblichen Methoden durch Dispergieren einer Mischung von
30 g Bindemittelharz
9 g Ruß Printex 300 (Degussa AG)
61 g Toluol
Farben für den Illustrationstiefdruck hergestellt und im Tiefdruckverfahren stark saugendes Naturpapier bedruckt.

Der Glanz der Andrucke, der für ein gutes drucktechnisches Ergebnis möglichst hoch sein sollte, wird sodann mit dem Laborreflektometer nach Lange bei einem Einstrahlwinkel von 60° gemessen.

Die Scheuerfestigkeit der Druckfilme wird mit dem Gerät Prüfbau-Quadrant bei 50 Hüben und einer Belastung von 600 g bestimmt und mit Noten von 1 bis 6 bewertet. 1 bedeutet dabei eine sehr gute, 6 eine sehr schlechte Scheuerfestigkeit.

| Farbe | A | B | C | D |
|---|---|---|---|---|
| Glanz in % | 17,5 | 19 | 18,5 | 14 |
| Scheuerfestigkeit | 2 | 2 | 2 | 5 |

Die erfindungsgemäßen Produkte erweisen sich bezüglich Dispergierwirkung für Ruß und der daraus resultierenden Glanzentwicklung der Farben wie auch der Scheuerfestigkeit dem Bindemittelharz des Standes der Technik überlegen.

## Patentansprüche

1. Kohlenwasserstoffharze enthaltend wiederholende Einheiten abgeleitet von Verbindungen jeder der Gruppen der
A) zwei- oder mehrfach ungesättigten linearen, verzweigten oder cyclischen Kohlenwasserstoffe mit 4 bis 10 Kohlenstoffatomen sowie deren gegebenenfalls auch gemischte Oligomeren mit Polymerisationsgraden von 2 bis 10,
B) Naturharze und Naturharzsäuren,
C) α,β-ungesättigten Carbonsäuren und/oder deren Anhydriden,
D) Verbindungen zweiwertiger Metalle, und
E) Fettsäuren;
erhältlich durch Umsetzung von Verbindungen der Gruppe A) mit Verbindungen der Gruppe B) und anschließende Umsetzung des Reaktionsprodukts mit Verbindungen aus jeder der Gruppen C), D) und E) bei einer Temperatur von 100 bis 300 °C unter Wasserabspaltung.

2. Kohlenwasserstoffharz nach Anspruch 1, dadurch gekennzeichnet, daß Massenanteile von einer oder mehreren Verbindungen
10 bis 90 % aus der Substanzgruppe A),
10 bis 90 % aus der Substanzgruppe B),
0,1 bis 20 % aus der Substanzgruppe C),
0,1 bis 10 % aus der Substanzgruppe D),
0,1 bis 20% aus der Substanzgruppe E)
miteinander umgesetzt werden, wobei die Gesamtmasse der eingesetzten Verbindungen 100 % beträgt.

3. Kohlenwasserstoffharz nach Anspruch 1, dadurch gekennzeichnet, daß die Umsetzung der Verbindungen aus den Substanzgruppen A) und B) bei Drücken von 0,1 bis 1,5 MPa (1 bis 15 bar) erfolgt und die nachfolgende Umsetzung mit Verbindungen aus den Substanzgruppen C), D) und E) drucklos.

4. Kohlenwasserstoffharz nach Anspruch 1, dadurch gekennzeichnet, daß die Reaktion während der Umsetzung von Verbindungen der Gruppen A) und B) im Temperaturbereich von 200 bis 300 °C, und die Reaktion während der Umsetzung mit Verbindungen der Gruppen C), D) und E) im Temperaturbereich von 200 bis 280 °C durchgeführt wird.

5. Kohlenwasserstoffharz nach Anspruch 1, dadurch gekennzeichnet, daß die Zugabe von Verbindungen der Substanzgruppe E) nach der Zugabe von Verbindungen der Substanzgruppe D) zum Reaktionsgemisch erfolgt.

6. Modifiziertes Kohlenwasserstoffharz nach Anspruch 1, dadurch gekennzeichnet, daß als zwei- oder mehrfach ungesättigte lineare, verzweigte oder cyclische Kohlenwasserstoffe mit 4 bis 10 Kohlenwasserstoffatomen Cyclopentadien und/oder Dicyclopentadien eingesetzt werden.

7. Modifiziertes Kohlenwasserstoffharz nach Anspruch 1, dadurch gekennzeichnet, daß als zwei- oder mehrfach ungesättigte lineare, verzweigte oder cyclische Kohlenwasserstoffe mit 4 bis 10 Kohlenwasserstoffatomen Cyclopentadien und/oder Dicyclopentadien im Gemisch mit gegebenenfalls Piperylen, gegebenenfalls Styrol und gegebenenfalls Inden eingesetzt werden.

8. Kohlenwasserstoffharz nach Anspruch 1, dadurch gekennzeichnet, daß als zweiwertige Metallverbindungen solche des Calciums, Magnesiums oder Zinks verwendet werden, jeweils alleine oder im Gemisch.

9. Kohlenwasserstoffharz nach Anspruch 1, gekennzeichnet, daß die zweiwertigen Metallverbindungen in Form ihrer Oxide und Hydroxide eingesetzt werden.

10. Kohlenwasserstoffharz nach Anspruch 1, dadurch gekennzeichnet, daß als Metallverbindung eine Magnesiumverbindung eingesetzt wird.

11. Kohlenwasserstoffharz nach Anspruch 1, dadurch gekennzeichnet, daß als Metallverbindung eine Zinkverbindung eingesetzt wird.

12. Kohlenwasserstoffharz nach Anspruch 1, dadurch gekennzeichnet, daß als Fettsäuren ungesättigte Fettsäuren mit 10 bis 26 C-Atomen und/oder deren Dimere oder Trimere verwendet werden.

13. Kohlenwasserstoffharz nach Anspruch 1, dadurch gekennzeichnet, daß als Fettsäure Tallölfettsäure verwendet wird.

14. Kohlenwasserstoffharz nach Anspruch 1, dadurch gekennzeichnet, daß dem Reaktionsgemisch Verbindungen der Substanzklasse B) zugesetzt werden.

15. Kohlenwasserstoffharz nach Anspruch 1, dadurch gekennzeichnet, daß seine durch Gelpermeationschromatographie an Polystyrol ermittelte gewichtsmittlere molare Masse M_{w} zwischen 500 und 3000 g/mol liegt.

16. Kohlenwasserstoffharz nach Anspruch 1, dadurch gekennzeichnet, daß seine Schmelzviskosität bei 250 °C und einem Schergefälle von 100 s⁻¹ zwischen 1 000 und 5 000 mPa·s liegt.

17. Verfahren zu Herstellung von modifizierten Kohlenwasserstoffharzen nach Anspruch 1 , dadurch gekennzeichnet, daß die Umsetzung in mindestens zwei Stufen durchgeführt wird, wobei die Komponenten A) und B) zunächst in der ersten Stufe bei einer Temperatur von 200 bis 300 °C und unter einem Druck von 0,1 bis 1,5 MPa miteinander zur Reaktion gebracht werden, und dann das erhaltene Polymerisat in den anschließenden Stufen bei Drucken bis zu 0,2 MPa mit Verbindungen aus den Gruppen C), D) und E) im Temperaturbereich von 200 bis 280 °C unter Wasserabspaltung umgesetzt wird, wobei in der zweiten und den weiteren Stufen jeweils das Reaktionsprodukt der vorigen Stufe mit mindestens einer Verbindung aus mindestens einer der Gruppen C), D) und E) reagiert wird.

18. Verfahren nach Anspruch 17, dadurch gekennzeichnet, daß es in zwei Stufen durchgeführt wird, wobei in der zweiten Stufe das Reaktionsprodukt der ersten Stufe mit jeweils mindestens einer der Verbindungen der Gruppen C), D) und E) umgesetzt wird.

19. Verwendung der Kohlenwasserstoffharze nach Anspruch 1 in Pigmentkonzentraten.

20. Verwendung der Kohlenwasserstoffharze nach Anspruch 1 in Druckfarben.

21. Verwendung der Kohlenwasserstoffharze nach Anspruch 1 in Druckfarben für den Toluoltiefdruck.

22. Verwendung der Kohlenwasserstoffharze nach Anspruch 1 in Druckfarben für den Tiefdruck mit Benzin.

23. Verwendung der Kohlenwasserstoffharze nach Anspruch 1 in Druckfarben für den Offsetdruck.
